# FASCICULE DE BREVET EUROPEEN

(11) **EP 3 776 882 B1**
(45) Date de publication et mention de la délivrance du brevet: **26.07.2023**
(21) Numéro de dépôt: 19722164.1
(22) Date de dépôt: 04.04.2019
(51) Int. Cl.: H04B 3/54, H04B 3/56, H04B 1/38

(54) **SYSTÈME DE TRANSMISSION DE DONNÉES**
DATENÜVBERTRAGUNGSSYSTEM
DATA TRANSMISSION SYSTEM

(30) Priorité: 04.04.2018 US 201862652531 P; 13.07.2018 FR 1856512; 25.10.2018 FR 1859892
(43) Date de publication de la demande: 17.02.2021
(73) Titulaire: SAFRAN AEROTECHNICS, 78370 Plaisir (FR)
(72) Inventeur: RACIC, Zoran, 75003 PARIS (FR)
(74) Mandataire: Plasseraud IP
(86) Numéro de dépôt international: PCT/FR2019/050793
(87) Numéro de publication internationale: WO 2019/193292

(56) Documents cités:
- FR-A1- 2 937 199
- US-A1- 2004 258 141
- US-B1- 6 192 069
- GRASSI F ET AL: "Effects of imbalance on conducted immunity of a PLC link onto a DC power-bus for spacecraft", 2015 ASIA-PACIFIC SYMPOSIUM ON ELECTROMAGNETIC COMPATIBILITY (APEMC), IEEE, 26 mai 2015 (2015-05-26), pages 665-668, XP033189121, DOI: 10.1109/APEMC.2015.7175334 ISBN: 978-1-4799-6668-4 [extrait le 2015-08-03]
- LARHZAOUI THOMAS ET AL: "OFDM PLC transmission for aircraft flight control system", 18TH IEEE INTERNATIONAL SYMPOSIUM ON POWER LINE COMMUNICATIONS AND ITS APPLICATIONS, IEEE, 30 mars 2014 (2014-03-30), pages 220-225, XP032594272, DOI: 10.1109/ISPLC.2014.6812333 [extrait le 2014-05-08]

## Description

La présente invention se situe dans le domaine des systèmes de transmission de données pour aéronef.

Les aéronefs comportent un réseau de distribution de puissance et un réseau de transmission de données indépendant du réseau de distribution de puissance.

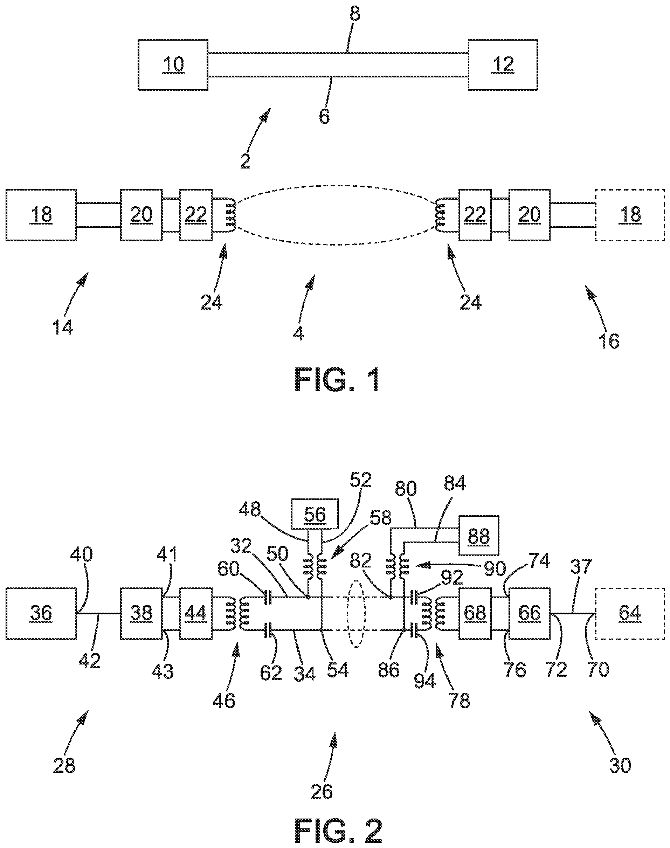

La figure 1 représente un exemple d'un système 2 de transmission de puissance et d'un système 4 de transmission de données généralement montés dans un aéronef. Le système 2 de transmission de puissance est indépendant du système 4 de transmission de données.

Le système 2 de transmission de puissance comporte deux câbles 6,8 connectés d'une part, à une source 10 d'alimentation en tension de l'aéronef et, d'autre part, à une unité de conversion de puissance 12 ou à un ensemble 12 d'équipements électriques.

Le système 4 de transmission de données comprend une première unité d'émission-réception 14, une deuxième unité d'émission-réception 16 propre à transmettre et à recevoir des données à et de la première unité d'émission-réception 14. Ces données sont transmises par l'intermédiaire d'ondes radiofréquences. Les unités d'émission-réception 14,16 sont identiques. Elles comportent chacune une unité de traitement de données 18 apte à générer des données à transmettre, un émetteur-récepteur radio-fréquence 20 connecté à l'unité de traitement 18, un réseau d'adaptation 22 connecté à l'unité de traitement et une antenne 24 d'émission et de réception connectée au réseau d'adaptation.

Toutefois, ces systèmes ne sont pas sécurisés et ne sont pas utilisés pour des systèmes critiques c'est-à-dire des systèmes pouvant entrainer la perte de l'avion.

Les documents US 2004/258141, US 6,192,069, FR 2 937 199,
GRASSI F ET AL « Effects of imbalance on conducted immunity of a PLC link onto a DC power bus for spacecraft»*,* LARHZAOUI THOMAS ET AL: "OFDM PLC transmission for aircraft flight control system" divulguent des technologies de transmission de puissance ou de données sur des lignes électriques.

La présente invention a pour but de proposer un système de transmission alternatif.

Le système est défini par la revendication 1.

L'invention sera mieux comprise à la lecture de la description qui va suivre, donnée uniquement à titre d'exemple et faite en se référant aux figures sur lesquelles :
- la figure 1 est une vue schématique d'un exemple de système de transmission de données et de système de transmission de puissance appartenant à l'état de la technique ; et
- la figure 2 est une vue schématique d'un système de transmission de données selon un premier mode de réalisation de l'invention ; et
- la figure 3 est une vue schématique d'un système de transmission de données selon un deuxième mode de réalisation de l'invention.

En référence à la figure 2, le système 26 de transmission de données selon un exemple de réalisation de la présente invention comporte un dispositif 28 d'émission de données apte à émettre des données, un dispositif 30 de réception de données apte à réceptionner les données transmises par le dispositif d'émission 28, un lien de communication 32 et un lien de communication supplémentaire 34.

Les liens de communication 32, 34 relient le dispositif d'émission 28 au dispositif de réception 30. Les liens de communication 32, 34 sont isolés l'un de l'autre. Ils sont par exemple constitués par un premier brin et un deuxième brin d'un câble à impédance contrôlé. Un câble de type RS 485 ou un câble ethernet peut par exemple être utilisé.

Le dispositif d'émission 28 comporte une unité de traitement 36 et un émetteur radiofréquence 38 connecté à l'unité de traitement 36 par une liaison de communication 42.

L'unité de traitement 36 est constituée par un contrôleur de protocole.

Elle comporte une sortie 40 propre à générer un signal représentatif de données à transmettre au dispositif de réception 30.

L'émetteur 38 est propre à recevoir le signal généré par l'unité de traitement, à le moduler et à l'amplifier. Enfin, l'émetteur 38 est apte à transmettre un signal radiofréquence contenant les données selon un mode différentiel au lien de communication 32 et au lien de communication supplémentaire 34. A cet effet, l'émetteur 38 comporte une sortie 41 connectée au lien de communication 32 et une sortie supplémentaire 43 connectée au lien de communication supplémentaire 34. L'émetteur radiofréquence 38 est par exemple un émetteur RFID.

La liaison de communication 42 est par exemple de type bus I²C (de l'anglais « Inter-Integrated Circuit »), liaison SPI (de l'anglais « Serial Peripheral Interface »), liaison RS (de l'anglais « Recommended Standard ») telle qu'une liaison RS 232.

Le dispositif d'émission 28 peut comporter un réseau d'adaptation d'impédance 44 connectée à l'émetteur radiofréquence 38 et/ou un transformateur électrique 46 connecté au réseau d'adaptation d'impédance 44.

Le réseau d'adaptation d'impédance 44 comporte au moins une impédance variable et permet d'optimiser le transfert de données.

Le transformateur électrique 46 est propre à isoler galvaniquement l'émetteur 38 par rapport aux liens de communication 32, 34.

Le transformateur électrique 46 possède un premier bobinage connecté au réseau d'adaptation d'impédance 44 et un second bobinage connecté à des composants capacitifs de couplage 60, 62, comme explicité ci-après. Le premier bobinage agit comme une antenne propre à transmettre le signal radiofréquence. Le deuxième bobinage agit comme une antenne propre à réceptionner le signal radiofréquence émis par le premier bobinage.

En variante, le premier bobinage est connecté directement à la sortie 41 et à la sortie supplémentaire 43 de l'émetteur et le second bobinage connecté au lien de communication 32 et au lien de communication supplémentaire 34.

Le dispositif d'émission 28 comporte en outre une ligne de puissance 48 connectée au lien de communication 32 en un point de connexion 50, et une ligne de puissance supplémentaire 52 connectée au lien de communication supplémentaire 34 en un point de connexion supplémentaire 54.

Le dispositif d'émission 28 peut également comporter une source 56 d'alimentation en tension de l'aéronef telle que le générateur de l'aéronef ou une batterie. Les lignes de puissance 48, 52 sont connectées à cette source d'alimentation 56. La ligne de puissance 48 est par exemple connectée à un potentiel de 28 Volts. La ligne de puissance supplémentaire 52 est connectée au retour de courant de la source d'alimentation en tension.

Avantageusement, le dispositif d'émission 28 peut également comprendre un filtre 58 connecté à la ligne de puissance 48 en amont du point de connexion 50 et à la ligne de puissance supplémentaire 52 en aval du point de connexion 54, en considérant le sens du courant d'alimentation provenant de la source d'alimentation 56. En particulier, le filtre 58 est connecté entre la source d'alimentation 56 et les points de connexion 50,54.

Le filtre 58 permet de bloquer la transmission du signal radiofréquence vers la source d'alimentation 56 tout en laissant passer la tension d'alimentation.

Ce filtre 58 est par exemple constitué par un transformateur.

Le dispositif d'émission 28 comporte de plus un composant capacitif de couplage 60 connecté entre la sortie de l'émetteur et le point de connexion 50, et un composant capacitif de couplage supplémentaire 62 connecté entre la sortie 41 supplémentaire 43 de l'émetteur et le point de connexion supplémentaire 54.

Le composant capacitif de couplage 60 et le composant capacitif de couplage supplémentaire 62 sont propres à transmettre le signal radiofréquence et à bloquer la tension d'alimentation. Ainsi, la tension d'alimentation appliquée par la source d'alimentation 56 n'est pas transmise à l'émetteur radiofréquence 38.

Les composants capacitifs de couplage 60,62 sont, par exemple, constitués par des capacités.

Avantageusement, les composants capacitifs de couplage 60,62 bloquent la tension d'alimentation afin qu'elle ne soit pas transmise à l'émetteur radiofréquence 38.

Le dispositif de réception 30 comporte une unité de traitement 64 et un récepteur radiofréquence 66 connecté à l'unité de traitement.

L'unité de traitement 64 est identique ou similaire à l'unité de traitement 36 du dispositif d'émission. Elle comporte une entrée 70 connectée à une sortie 72 du récepteur 66 par un lien de communication 37 de type bus I²C, liaison SPI, liaison RS.

Le récepteur radiofréquence 66 comporte la sortie 72, une entrée 74 connecté au lien de communication 32 et une entrée supplémentaire 76 connectée au lien de communication supplémentaire 34

Le dispositif de réception 30 peut également comporter un réseau 68 d'adaptation d'impédance connecté au récepteur radiofréquence 66 et/ou un transformateur électrique 78 connecté au réseau d'adaptation d'impédance 68.

Le réseau d'adaptation d'impédance 68 et le transformateur 78 sont identiques ou similaires au réseau d'adaptation 68 et au transformateur 46 du dispositif d'émission 28. En particulier, le transformateur électrique 78 possède un premier bobinage connecté à la sortie 74 et à la sortie supplémentaire 76 du récepteur et un second bobinage connecté au lien de communication 32 et au lien de communication supplémentaire 34.

Le dispositif de réception 30 comporte une ligne de puissance 80 connectée au lien de communication 32 en un point de connexion 82 et une ligne de puissance supplémentaire 84 connectée au lien de communication supplémentaire 34 en un point de connexion supplémentaire 86.

Le dispositif de réception 30 peut également comporter un ensemble d'équipements 88 connecté à la ligne de puissance 32 et à la ligne de puissance supplémentaire 34. L'ensemble d'équipements 88 comprend un ou plusieurs équipements électriques.

De préférence, le dispositif de réception 30 comprend un filtre 90 connecté à la ligne de puissance 80 en aval du point de connexion 82 et à la ligne de puissance supplémentaire 84 en amont du point de connexion supplémentaire 86 en considérant le sens du courant provenant de la source d'alimentation 56 et alimentant l'ensemble d'équipements 88. En particulier, le filtre 90 est connecté entre l'ensemble d'équipements 88 et les points de connexion 82 et 86. Ce filtre 90 est apte à bloquer le signal radiofréquence et à laisser passer la tension d'alimentation. Le filtre 90 est par exemple constitué par un transformateur.

Le dispositif de réception 30 comprend en outre un composant capacitif de couplage 92 connecté entre le point de connexion 82 et l'entrée 74 du récepteur radiofréquence 66, et un composant capacitif de couplage supplémentaire 94 connecté entre le point de connexion 86 et l'entrée 76 du récepteur radiofréquence 66.

Les composants capacitifs de couplage 92,94 sont propres à bloquer la tension d'alimentation provenant de la source de tension 56 et à laisser passer le signal radiofréquence. Les composants capacitifs de couplage 92,94 comprennent une ou plusieurs capacités.

En variante, l'ensemble d'équipements 88 connecté au dispositif d'émission 28 et la source de tension 56 est connectée au dispositif de réception 30. Dans ce cas, c'est le dispositif de réception 30 qui alimente en tension le dispositif d'émission 28, les données étant transmises du dispositif d'émission 28 vers le dispositif de réception 30.

En variante, le dispositif d'émission 28 et/ou le dispositif de réception 30 ne comporte pas de transformateur électrique 46, 78.

En variante, la ligne de puissance 48, 80 et la ligne de puissance supplémentaire 52,84 du dispositif d'émission 28 et/ou le dispositif de réception 30 ne comporte pas de filtre 58, 90.

En variante également, le système de transmission 26 comporte un unique lien de communication 32 et l'émetteur 38 comporte une unique sortie 41 propre transmettre le signal radiofréquence représentatif des données à transmettre sur l'unique lien de communication dans un mode non différentiel.

En fonctionnement, l'émetteur radiofréquence 38 module les données issues de l'unité de traitement 36 en un signal radiofréquence et transmet le signal ainsi obtenu aux liens de communication 32,34. Les données sont ainsi transmises du dispositif d'émission 28 vers le dispositif de réception 30. Les données réceptionnées sont démodulées par le récepteur radiofréquence 66 puis transmises à l'unité de traitement 64. En parallèle, la tension d'alimentation provenant de la source d'alimentation 56 est des lignes de puissance 48, 52 vers les liens de communication 32, 34. Cette tension d'alimentation est transmise aux lignes de puissance 80, 84. Cette tension d'alimentation alimente l'ensemble d'équipements électriques 88.

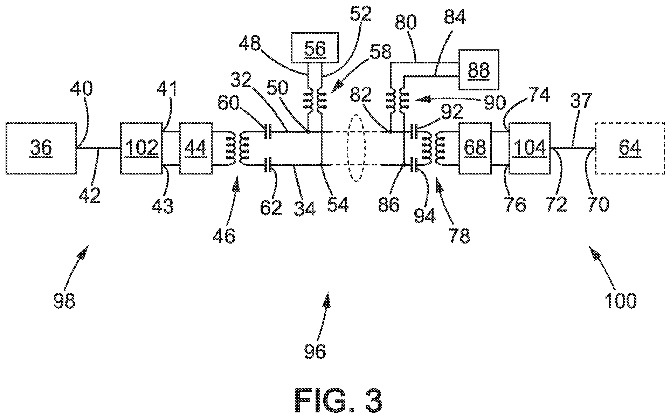

Le système de transmission de données 96 selon le deuxième mode de réalisation de l'invention représenté sur la figure 3 est identique au système de transmission de données selon le premier mode de réalisation à l'exception du fait qu'il comporte un premier dispositif d'émission-réception 98 à la place du dispositif d'émission 28 et un deuxième dispositif d'émission-réception 100 à la place du dispositif de réception 30.

A cet effet, dans ce mode de réalisation, l'émetteur radiofréquence 38 est un émetteur-récepteur radiofréquence 102 et le récepteur radiofréquence 66 est un émetteur-récepteur radio fréquence 104. Les autres composants du système de transmission 96 selon le deuxième mode de réalisation sont identiques ou similaires aux composants du système de transmission 26 selon le premier mode de réalisation et ne seront pas décrits une seconde fois.

Le fonctionnement du système de transmission selon le deuxième mode de réalisation est similaire au fonctionnement du système de transmission selon le premier mode de réalisation. Des données sont transmises du premier dispositif d'émission-réception 98 au deuxième dispositif d'émission-réception 100 et des données sont transmises du deuxième dispositif d'émission-réception 100 au deuxième dispositif d'émission-réception 98. La source de tension 56 alimente l'ensemble d'équipements 88. La tension d'alimentation est transmise par les lignes de puissance 48,58 du premier dispositif 98, les liens de communications 32, 34 et les lignes de puissance 80, 84 du deuxième dispositif 100.

Bien évidemment, l'invention n'est pas limitée aux modes de réalisation décrits précédemment et fournis uniquement à titre d'exemple, mais est définie par la revendication 1.

## Revendications

1. Système de transmission de données (26,96), ledit système (26,96) comprenant un dispositif d'émission (28,98), un dispositif de réception (30,100) et un lien de communication (32),
• le dispositif d'émission (28,98) comprenant :
- un émetteur radiofréquence (38,102) ayant au moins une sortie (41) connectée au lien de communication (32), l'émetteur radiofréquence (38,102) étant propre à générer un signal radiofréquence représentatif de données à transmettre,
- une ligne de puissance (48) connectée au lien de communication (32) en un point de connexion (50); la ligne de puissance (48) étant destinée à être portée à une tension d'alimentation,
- au moins un composant capacitif de couplage (60) connecté entre la sortie (41) de l'émetteur radiofréquence et le point de connexion (50), ledit composant capacitif de couplage (60) étant propre à transmettre le signal radiofréquence et à bloquer la tension d'alimentation,
• le dispositif de réception (30,100) comprenant :
- un récepteur radiofréquence (66,104) ayant au moins une entrée (74) connectée au lien de communication (32) pour recevoir ledit signal radiofréquence,
- une ligne de puissance (80) connectée au lien de communication (32) en un point de connexion (82),
- au moins un composant capacitif de couplage (92) connecté entre le point de connexion (82) et l'entrée (74) du récepteur radiofréquence, ledit composant capacitif de couplage (92) étant propre à transmettre le signal radiofréquence et à bloquer la tension d'alimentation,
**caractérisé en ce que** le dispositif d'émission (28,98) et/ou le dispositif de réception (30,100) comprend en outre un transformateur (58,90) propre à bloquer le signal radiofréquence et à transmettre la tension d'alimentation, ledit transformateur (58,90) étant connecté à la ligne de puissance (48) et **en ce que** l'émetteur radiofréquence (38,102) comprend une sortie supplémentaire (43) et le récepteur radiofréquence (66,104) comprend une entrée supplémentaire (76), le système de transmission (26,96) comprenant un lien de communication supplémentaire (34) connecté entre la sortie supplémentaire (43) de l'émetteur radiofréquence et l'entrée supplémentaire (76) du récepteur radiofréquence,
• le dispositif d'émission (28,98) comprenant :
- une ligne de puissance supplémentaire (52) connectée au lien de communication supplémentaire (34) en un point de connexion supplémentaire (54) ; et
- un composant capacitif de couplage supplémentaire (62) connecté entre la sortie supplémentaire (43) de l'émetteur radiofréquence et le point de connexion supplémentaire (54),
• le dispositif de réception (30,100) comprenant :
- une ligne de puissance supplémentaire (84) connectée au lien de communication supplémentaire (34) en un point de connexion supplémentaire (86); et
- un composant capacitif de couplage supplémentaire (94) connecté entre le point de connexion supplémentaire (86) et l'entrée supplémentaire (76) du récepteur radiofréquence.

2. Système de transmission (26,96) selon la revendication 1, dans lequel le dispositif d'émission (28,98) et/ou le dispositif de réception (30,100) comporte un transformateur (46, 78) connecté, d'une part, à l'émetteur radiofréquence (38,102) et/ou au récepteur radiofréquence (66,104) et, d'autre part, au lien de communication (32) et au lien de communication supplémentaire (34).

3. Système de transmission (26,96) selon l'une quelconque des revendications 1 et 2, dans lequel le lien de communication (32) est un brin d'un câble à impédance contrôlé.

4. Système de transmission (26,96) selon l'une quelconque des revendications 1 à 3, dans lequel le dispositif d'émission (28,98) comporte un réseau d'adaptation d'impédance (44) connecté entre l'émetteur radiofréquence (38,102) et le composant capacitif de couplage (60), ledit réseau d'adaptation (44) étant propre à adapter les impédances du lien de communication (32).

5. Système de transmission (26,96) selon l'une quelconque des revendications 1 à 4, dans lequel le dispositif de réception (30,100) comporte un réseau d'adaptation d'impédance (68) connecté entre le composant capacitif de couplage (92) et le récepteur radiofréquence (66,104), ledit réseau d'adaptation (68) étant propre à adapter les impédances du lien de communication (32).

6. Système de transmission (26,96) selon l'une quelconque des revendications 1 à 5 qui comporte en outre une source (56) d'alimentation en tension connectée à la ligne de puissance (48, 80) du dispositif d'émission (28,98) ou du dispositif de réception (30,100).

7. Système de transmission (26,96) selon l'une quelconque des revendications 1 à 6 qui comporte en outre un ensemble (88) d'équipements électriques connecté à la ligne de puissance (70) du dispositif d'émission (28,98) ou du dispositif de réception (30,100).

## Patentansprüche

1. Datenübertragungssystem (26, 96), wobei das System (26, 96) eine Sendevorrichtung (28, 98), eine Empfangsvorrichtung (30, 100) und eine Kommunikationsverbindung (32) umfasst,
• wobei die Sendevorrichtung (28, 98) umfasst:
- einen Hochfrequenzsender (38, 102) mit zumindest einem Ausgang (41), der mit der Kommunikationsverbindung (32) verbunden ist, wobei der Hochfrequenzsender (38, 102) dazu geeignet ist, ein Hochfrequenzsignal zu erzeugen, das für zu übertragende Daten repräsentativ ist,
- eine Stromleitung (48), die an einem Verbindungspunkt (50) mit der Kommunikationsverbindung (32) verbunden ist; wobei die Stromleitung (48) dazu bestimmt ist, an eine Versorgungsspannung angelegt zu werden,
- zumindest ein kapazitives Kopplungsbauteil (60), das zwischen den Ausgang (41) des Hochfrequenzsenders und den Verbindungspunkt (50) geschaltet ist, wobei das kapazitive Kopplungsbauteil (60) dazu geeignet ist, das Hochfrequenzsignal zu übertragen und die Versorgungsspannung zu sperren,
• wobei die Empfangsvorrichtung (30, 100) umfasst:
- einen Hochfrequenzempfänger (66, 104) mit zumindest einem Eingang (74), der mit der Kommunikationsverbindung (32) verbunden ist, um das Hochfrequenzsignal zu empfangen,
- eine Stromleitung (80), die an einem Verbindungspunkt (82) mit der Kommunikationsverbindung (32) verbunden ist,
- zumindest ein kapazitives Kopplungsbauteil (92), das zwischen den Verbindungspunkt (82) und den Eingang (74) des Hochfrequenzempfängers geschaltet ist, wobei das kapazitive Kopplungsbauteil (92) dazu geeignet ist, das Hochfrequenzsignal zu übertragen und die Versorgungsspannung zu sperren,
**dadurch gekennzeichnet, dass**
die Sendevorrichtung (28, 98) und/oder die Empfangsvorrichtung (30, 100) ferner einen Transformator (58, 90) umfasst, der dazu geeignet ist, das Hochfrequenzsignal zu sperren und die Versorgungsspannung zu übertragen, wobei der Transformator (58, 90) mit der Stromleitung (48) verbunden ist, und
dass der Hochfrequenzsender (38, 102) einen zusätzlichen Ausgang (43) und der Hochfrequenzempfänger (66, 104) einen zusätzlichen Eingang (76) umfasst, wobei das Übertragungssystem (26, 96) eine zusätzliche Kommunikationsverbindung (34) umfasst, die zwischen den zusätzlichen Ausgang (43) des Hochfrequenzsenders und den zusätzlichen Eingang (76) des Hochfrequenzempfängers geschaltet ist,
• wobei die Sendevorrichtung (28, 98) umfasst:
- eine zusätzliche Stromleitung (52), die an einem zusätzlichen Verbindungspunkt (54) mit der zusätzlichen Kommunikationsverbindung (34) verbunden ist; und
- ein zusätzliches kapazitives Kopplungsbauteil (62), das zwischen den zusätzlichen Ausgang (43) des Hochfrequenzsenders und den zusätzlichen Verbindungspunkt (54) geschaltet ist,
• wobei die Empfangsvorrichtung (30, 100) umfasst:
- eine zusätzliche Stromleitung (84), die an einem zusätzlichen Verbindungspunkt (86) mit der zusätzlichen Kommunikationsverbindung (34) verbunden ist; und
- ein zusätzliches kapazitives Kopplungsbauteil (94), das zwischen den zusätzlichen Verbindungspunkt (86) und den zusätzlichen Eingang (76) des Hochfrequenzempfängers geschaltet ist.

2. Übertragungssystem (26, 96) nach Anspruch 1,
wobei die Sendevorrichtung (28, 98) und/oder die Empfangsvorrichtung (30, 100) einen Transformator (46, 78) umfasst, der einerseits mit dem Hochfrequenzsender (38, 102) und/oder dem Hochfrequenzempfänger (66, 104) und andererseits mit der Kommunikationsverbindung (32) und der zusätzlichen Kommunikationsverbindung (34) verbunden ist.

3. Übertragungssystem (26, 96) nach einem der Ansprüche 1 und 2,
wobei die Kommunikationsverbindung (32) ein Strang eines impedanzgesteuerten Kabels ist.

4. Übertragungssystem (26, 96) nach einem der Ansprüche 1 bis 3,
wobei die Sendevorrichtung (28, 98) ein Impedanzanpassungsnetzwerk (44) umfasst, das zwischen den Hochfrequenzsender (38, 102) und das kapazitive Kopplungsbauteil (60) geschaltet ist, wobei das Anpassungsnetzwerk (44) dazu geeignet ist, die Impedanzen der Kommunikationsverbindung (32) anzupassen.

5. Übertragungssystem (26, 96) nach einem der Ansprüche 1 bis 4,
wobei die Empfangsvorrichtung (30, 100) ein Impedanzanpassungsnetzwerk (68) umfasst, das zwischen das kapazitive Kopplungsbauteil (92) und den Hochfrequenzempfänger (66, 104) geschaltet ist, wobei das Anpassungsnetzwerk (68) dazu geeignet ist, die Impedanzen der Kommunikationsverbindung (32) anzupassen.

6. Übertragungssystem (26, 96) nach einem der Ansprüche 1 bis 5, ferner enthaltend eine Spannungsversorgungsquelle (56), die mit der Stromleitung (48, 80) der Sendevorrichtung (28, 98) oder der Empfangsvorrichtung (30, 100) verbunden ist.

7. Übertragungssystem (26, 96) nach einem der Ansprüche 1 bis 6, ferner enthaltend eine Anordnung (88) von elektrischen Einrichtungen, die mit der Stromleitung (70) der Sendevorrichtung (28, 98) oder der Empfangsvorrichtung (30, 100) verbunden ist.

## Claims

1. Data transmission system (26, 96), said system (26, 96) comprising an emitting device (28, 98), a receiving device (30, 100) and a communication link (32),
• where the emitting device (28, 98) comprises:
- a radio frequency emitter (38, 102) having at least one output (41) connected to the communication link (32), where the radio frequency emitter (38, 102) is suited for generating a radio frequency signal representative of data to be transmitted;
- a power line (48) connected to the communication link (32) at a connection point (50), where the power line (48) is intended to be brought to a supply voltage;
- at least one capacitive coupling component (60) connected between the output (41) of the radio frequency emitter and the connection point (50), where said capacitive coupling component (60) is suited for transmitting the radio frequency signal and blocking the supply voltage;
• where the receiving device (30, 100) comprises:
- a radio frequency receiver (66, 104) having at least one input (74) connected to the communication link (32) for receiving said radio frequency signal;
- a power line (80) connected to the communication link (32) at a connection point (82);
- at least one capacitive coupling component (92) connected between the connection point (82) and the input (74) of the radio frequency receiver, where said capacitive coupling component (92) is suited for transmitting the radio frequency signal and blocking the supply voltage, **characterized in that** the emitting device (28, 98) and/or the receiving device (30, 100) further comprise a transformer (58, 90) suited for blocking the radio frequency signal and for transmitting the supply voltage, where said transformer (58, 90) is connected to the power line (48), and **in that** wherein the radio frequency emitter (38, 102) comprises a supplemental output (43) and the radio frequency receiver (66, 104) comprises a supplemental input (76), the transmission system (26, 96) comprising a supplemental communication link (34) connected between the supplemental output (43) of the radio frequency emitter and the supplemental input (76) of the radio frequency receiver,
the emitting device (28, 98) comprising:
- a supplemental power line (52) connected to the supplemental communication link (34) at a supplemental connection point (54); and
- a supplemental capacitive coupling component (62) connected between the supplemental output (43) of the emitter and the supplemental connection point (54),
the receiving device (30, 100) comprising:
- a supplemental power line (84) connected to the supplemental communication link (34) at a supplemental connection point (86); and
- a supplemental capacitive coupling component (94) connected between the supplemental connection point (86) and the supplemental input (76) of the radio frequency receiver.

2. The transmission system (26, 96) according to claim 1, wherein the emitting device (28, 98) and/or the receiving device (30, 100) comprise a transformer (46, 78) connected, on the one side, to the radio frequency emitter (38, 102) and/or to the radio frequency receiver (66, 104) and, on the other side, to the communication link (32) and to the supplemental communication link (34).

3. The transmission system (26, 96) according to any one of claims 1 and 2, wherein the communication link (32) is a strand of a controlled impedance cable.

4. The transmission system (26, 96) according to any one of claims 1 to 3, wherein the emitting device (28, 98) comprises an impedance matching network (44) connected between the radio frequency emitter (38, 102) and the capacitive coupling component (60), where said matching network (44) is suited for matching the impedances of the communication link (32).

5. The transmission system (26, 96) according to any one of claims 1 to 4, wherein the receiving device (30, 100) comprises an impedance matching network (68) connected between the capacitive coupling component (92) and the radio frequency emitter (66, 104), where said matching network (68) is suited for matching the impedances of the communication link (32).

6. The transmission system (26, 96) according to any one of claims 1 to 5 further comprising a voltage supply (56) source connected to the power line (48, 80) of the emitting device (28, 98) or the receiving device (30, 100).

7. The transmission system (26, 96) according to any one of claims 1 to 6 further comprising electrical equipment (88) connected to the power line (70) of the emitting device (28, 98) or the receiving device (30, 100).
